# EUROPEAN PATENT APPLICATION

(11) **EP 3 591 512 A1**
(43) Date of publication of application: **08.01.2020**
(21) Application number: 18181683.6
(22) Date of filing: 04.07.2018
(51) Int. Cl.: G06F 3/12

(54) **DOCUMENT PROCESSING SYSTEM FOR PROCESSING A PRINT JOB**

(71) Applicant: OCE Holding B.V., 5914 CA Venlo (NL)
(72) Inventor: ROELFS, Harmannus B., 5914 CA Venlo (NL); BRÜNNER, Marvin P., 5914 CA Venlo (NL); GEELS, Jan H., 5914 CA Venlo (NL); BLASIAK, Daniel B., 5914 CA Venlo (NL); CUSTINNE, Grégory E.C., 5914 CA Venlo (NL); MUNTEANU, Andra T., 5914 CA Venlo (NL)
(74) Representative: OCE IP Department

(57) **Abstract**

The invention relates to a method for a document processing system comprising a plurality of devices. The plurality of devices comprises at least one printer and at least one finisher in order to deliver at least one end print product according to print specifications. Each device of the plurality of devices is described in a dedicated device model comprising constraints and capabilities of said device. The document processing system comprises a user interface window for displaying parallel production lane objects with respect to a production of the at least one end print product. The method automatically checks based on the constraints and capabilities of the plurality of devices needed for the at least one end print product if output of a first device represented by a first device object at the end of one production lane object which is not an end print product out of the at least one end print product is input for a second device represented by a second device object in another production lane object than the one production lane object. If the outcome of the check is positive, a combination digital object is automatically displayed directed from the first device object towards the second device object on the user interface window.

## Description

### Field of the invention

The present invention relates to a document processing system comprising a plurality of devices, the plurality of devices comprising at least one printer and at least one finisher in order to deliver at least one end print product according to print specifications, each device of the plurality of devices being described in a dedicated device model comprising constraints and capabilities of said device, the document processing system comprising a user interface window for displaying in one direction in a plane of the user interface window parallel production lane objects with respect to a production of the at least one end print product, the production lane objects comprising at least one device object, each device object representing a device of the plurality of devices, each production lane object having a relative large length to a width of the production lane object, the relative large length being substantially displayed in the one direction on the window and comprising at least one device object in a consecutive order of processing in the one direction of the length of the production lane object, wherein output of a device is input for the next device represented in the same production lane object.
The present invention further relates to a method for a document processing system according to the invention.

The print specifications result from using PDL information and possibly fixed device parameters during simulation of the device models in a constructed production route. The document processing system may find multiple options for producing the at least one end product.

Constraints and capabilities of a device also comprise imposition schemes and information about input facilities and output facilities of the device.

### Background of the invention

A document processing system is known to comprise at least one printer and at least one finisher. Printed sheets can be processed on the at least one finisher to produce a variety of end products like loose leaf documents, booklets, brochures, folders, perfect bound books etc. Moreover, the sheets can be processed by one or more finishers before printing, for example pre-punching or pre-perforating. Hereinafter finishing is understood to include finishing actions before printing and finishing actions after printing. Hereinafter finishing actions mentioned in any specification of finishing actions are to be envisioned, for example in a job definition format (JDF) specification.
The variety in finisher devices is large. Finishers may be in-line, online, near-line, or off-line. Finishers may provide only a single action like a guillotine trimmer or a series of actions like a perfect bound book maker. Finishers may have different operating ranges and constraints. The number of finishing actions is finite like folding, cutting, trimming, stapling, punching, creasing etc. A finishing action is an operation on a sheet or on a stack of sheets or on an assembly of sheets like a book block with a cover glued around it. An example of an enumeration of finishing actions is given in "JDF specification"Release 1.5 -- December 31, 2013.
An input of a device is defined as a resource which is suitable to put in the device for production of a document by the device. The input may for example be a number of loose sheets, a stack of loose sheets, a number of pre-processed sheets, a number of bound sheets like a booklet or a book, one or more cover sheets, etc. The input may be put in an input holder of the device.

An output of a device is defined as a deliverable which is output by the device. The output may for example be a number of loose printed sheets, a stack of loose printed sheets, a number of bound sheets like a booklet or a book, one or more cover sheets, a number of finished sheets like a number of trimmed sheets, a number of cut sheets, a number of perforated sheets, a number of laminated sheets, etc.

A document processing system is known to comprise models for the devices with respect to their constraints and capabilities. However the construction of a production route consisting of a selection of production devices to be used for the production of the required physical end product is rather cumbersome. A sequence or network order in which to apply the production devices has to be determined and settings have to be applied to the production devices as part of the sequence or network order for producing the required physical end product. A production device is a printer or a finisher or any other means - even a human being like an operator or a robot like an operator - that is capable of participating in a production route.

It is an objective of the present invention to provide a document processing system that is capable of automatically constructing a production route for a desired end product.

### Summary of the invention

According to the present invention the objective is achieved by the document processing system according to the invention wherein the document processing system is configured to automatically check based on the constraints and capabilities of the plurality of devices needed for the at least one end print product if output of a first device represented by a first device object at the end of one production lane object which is not an end print product out of the at least one end print product is input for a second device represented by a second device object in another production lane object than the one production lane object, and if the outcome of the check is positive, to automatically display at the user interface window a combination digital object directed from the first device object towards the second device object.

The current invention introduces multiple production lane objects which are connected into a production route. Since multiple production lanes introduce scheduling aspects, the intuitive and visual representation of the production lanes, the device objects in the production lane objects and the combination digital objects prevent waste due to incorrectly scheduling of production steps.

In a preferred embodiment the user interface window comprises a two dimensional diagram of production lane objects wherein a higher positioned production lane object is executed before production lane objects below the higher positioned production lane object and execution of a device object in a production lane object occurs before an execution of a right neighboring device object taking into account the position and direction of the combination digital object if present. This preferred embodiment works according to a left-to-right-and-top-to-bottom concept.

According to an embodiment the second device represented by the second device object in the one another production lane object is a multiple input device which is configured to combine a plurality of inputs for the multiple input device into at least one output.

According to an embodiment the user interface window comprises a device pool of a plurality of device objects and the document processing system is configured to enable a user to select a device object from the device pool and to add a selected device object to one of the production lane objects. When the user constructs a production lane object intended to comprise an online finisher and a printer, the user will be prompted in order to let the user firstly add the online finisher to the production lane object and afterwards the printer. This is advantageous, since the constraints and capabilities of the selected online finisher will determine the suitable printer and printer instructions to be selected from the device pool.

According to an embodiment the document processing system is configured to add the selected device object to one of the production lane objects by means of a dragging action.

According to an embodiment the document processing system is configured to change a status of one of the production lane objects into an active status as a receptacle, to enable a user to select a device object from the device pool and to automatically add the user selected device object to one end of the one production lane object.

According to an embodiment the document processing system is configured to determine a preview image of an output of a device represented by the selected device object, and, upon adding the selected device object to one of the production lane objects, to display the preview image near the selected device object in the one production lane object.

According to an embodiment a device object positioned in one of the production lane objects comprises an initially visible list of at least one editable production parameter for a device represented by the device object.

According to an embodiment the document processing system is configured upon editing a production parameter from the initially visible list, to determine a new preview image of the output of the device which new preview image corresponds to the edited production parameter, and to display the new preview image near the selected device object in the one production lane object.

According to an embodiment a device object positioned in one of the production lane objects comprises a user operable digital element to display operator instructions for the device represented by the device object. The user operable digital preview item may be an instructions button.

According to an embodiment each production lane object comprises a user operable digital start item to start the processing of the at least one device represented in the production lane object. The user operable digital start item may be an execution button.

According to an embodiment a device represented by a device object is configurable by setting values of the at least one production parameter and the device model of the device has at least one device policy of how to use the device to achieve a desired output, each device policy at least being determined by a subset of the values of the at least one production parameter, and the document processing system is configured to select a device policy, and to instruct the device to act according to the selected device policy by at least limiting the set of values of the at least one production parameter to a subset which is determined by the selected device policy. After simulation via the device models, the device policy becomes visible in work in progress previews and end result previews.

According to an embodiment the document processing system is configured to select the device policy of the device from a list displayable near the device object representing the device.

According to an embodiment the document processing system is configured to automatically derive the desired device policy of the device from at least the print specifications of the at least one end print product. The print specifications result from using PDL information and possibly fixed device parameters during simulation of the device models in a production route constructed with the production lane objects. The document processing system may find multiple options for producing the at least one end product. A preferred option may be determined by an active device policy and will be shown as smart default production parameter values in a work in progress preview and/or in an end result preview.

The invention also relates to a method for a document processing system comprising a plurality of devices, the plurality of devices comprising at least one printer and at least one finisher in order to deliver at least one end print product according to print specifications, each device of the plurality of devices being described in a dedicated device model comprising constraints and capabilities of said device, the method comprising the steps of on a user interface window displaying in one direction in a plane of the user interface window parallel production lane objects with respect to a production of the at least one end print product, the production lane objects comprising at least one device object, each device object representing a device of the plurality of devices, each production lane object having a relative large length to a width of the lane, the relative large length being substantially displayed in the one direction on the window and comprising at least one device object in a consecutive order of processing in the one direction of the length of the production lane object, wherein output of a device is input for the next device represented in the same production lane object, the production lane objects being parallel to each other in the one direction of the production lane objects, automatically checking based on the constraints and capabilities of the plurality of devices needed for the at least one end print product if output of a first device represented by a first device object at the end of one production lane object which is not an end print product out of the at least one end print product is input for a second device represented by a second device object in another production lane object which is located lower on the window than the one production lane object, and if the outcome of the check is positive, and automatically displaying at the user interface window a combination digital object directed from the first device object towards the second device object.

According to an embodiment the method comprises the step of selecting at least one production lane object, exporting the device objects with parameters, constraints and capabilities from the corresponding device model from the at least one production lane object via a messaging format to another computer being configured to at least one out of design the at least one end product, plan production of the at least one end product, estimate cost of the at least one end product and manage the at least one end product in a warehouse with respect to the required materials for the at least one end product.

The invention also relates to a non-transitory software medium comprising executable program code configured to, when executed, perform the method according to the invention.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### Brief description of the drawings

- Fig. 1: shows a schematic view of a document processing system according to the invention.
- Fig. 2 - 9: show user interface windows of the document processing system according to the invention.
- Fig. 10: shows a first embodiment of the method according to the invention.
- Fig. 11 - 13: show a second embodiment of the method according to the invention.
- Fig. 14(a) - 14(c): show work-in-progress previews according to the invention.

### Detailed description of the embodiments

The present invention will now be described with reference to the accompanying drawings, wherein the same or similar elements are identified with the same reference numerals throughout the several views.

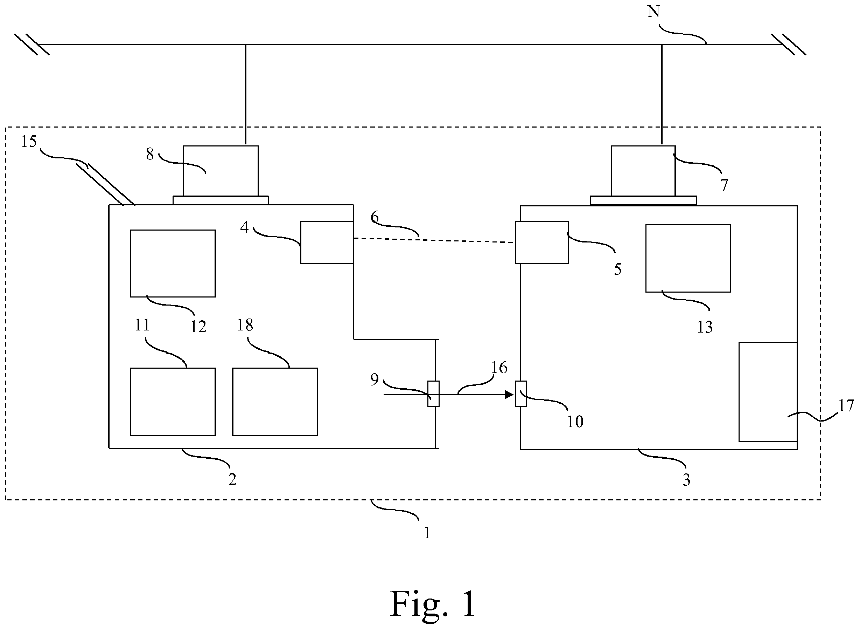

Fig. 1 is a schematic view of an embodiment of the document processing system 1 according to the invention. The view is showing the document processing system 1 comprising a printer 2, connected to a network N, a finisher 3 connected to the network N or remotely connected to the printer 2, a print interface 4 in the printer 2, a finishing interface 5 in the finisher 3, an optional data connection 6 between the print interface 4 and the finishing interface 5, a finishing module console 7, a print module console 8, a sheet outlet 9, a sheet inlet 10, a controller 12 in the printer 2, a finisher memory 13 in the finisher 3, an optional automatic document feeder 15 on the printer 2 for feeding sheets of the physical start product to the printer 2, at least one input holder 11, 18 for holding the physical start product like a stack of sheets and an output holder 17 on the finisher 3 for receiving and holding output of a plurality of sheets, for example a stack of printed and finished sheets.

The document processing system 1 comprises one printer 2 and one finisher 3, but more than one printer and/or more than one finisher may be envisioned in the document processing system 1. The one finisher 3 shown in Fig. 1 is a near-line finisher, but other kinds of finishers may be envisioned.

The following table introduces definitions for in-line finishers, on-line finishers, off-line finishers and near-line finishers.

| Integrated into the printing production route? | | **Settings Flow** | |
|---|---|---|---|
| | | ***YES*** | ***NO*** |
| **Paper flow** | ***YES*** | IN-line | ON-line |
| | ***NO*** | NEAR-line | OFF-line |

The in-line devices and on-line devices are part of the printing device. The off-line devices and near-line device are not part of the printing device. The corresponding device models which are created for these devices, reflect the aspects of in/on/off/near-line and multiple input and position of the in/on-line devices in the corresponding printer. The document processing system 1 is configured to deliver at least one end print product according to specifications of the print job received via the network N by the document processing system 1. The document processing system 1 may find multiple options for producing the at least one end product. A preferred option will be shown as smart default production parameter values and/or in a work in progress preview and in end-result previews. The preferred option shown may be called print job specifications or print specifications. An operator may change or fix some device parameters to another value. Such a change or fix will result in a new simulation via the device models where the available options are constraint by the user selection of the operator. The preferred option while taking the fixed values into account is shown, e.g. result in new print job specifications.

The print interface 4 and the finishing interface 5 are configured to exchange digital information about printing and finishing instructions, which printing and finishing instructions are needed for processing the print job in order to lead to the desired end product. The print interface 4 and finishing interface 5 may exchange data via the network N. A printed sheet arrives at the sheet outlet 9 in order to enter the finisher 3 via the sheet inlet 10, the sheet flow direction indicated by arrow 16.

Pre-printing instructions, printing instructions and finishing instructions may be part of specifications of the print job. Printing and finishing instructions may also be entered via a printer user interface console 8 and stored in the controller 12 of the printer 2. Finishing instructions may also be entered via a finisher user interface 7 and stored in the finisher memory 13 of the finisher 3.
Finishing instructions may be in a form of step-by-step actions to be executed by an operator, which may be on an instruction page, on a tablet, etc.

Each device of the document processing system 1 is described in a dedicated device model comprising constraints and capabilities of the device. The dedicated device models may be stored in the controller 12 of the printer 2. Based on the constraints and capabilities derived from the device models residing in the controller 12 the document processing system, in particular the controller 12, is configured to automatically check if output of a first device in the document processing system 1 which output is not a desired end print product is input for a second device in the document processing system 1.

The controller 12 may comprise the device models according to the invention. The device models may be part of a software application residing in memory of the controller 12 or may be implemented in one or more hardware units, or may be implemented as a combination of hardware and software in the controller 12.

In an embodiment at least one of the device models is part of a software or hardware application residing on at least one computer in the network N coupled to the printer 2 and/or the finisher 3. The device models may also be distributed among a plurality of computers in the network N. In this particular embodiment the at least one computer in the network is part of the document processing system 1. The network may expand into a cloud system or into an intranet or into the internet. The printer user interface console 8 may be used to display the production lane objects according to the invention. However, the production lane objects may also be displayed on a user interface comprised in the at least one computer in the network N. A mix of displaying production lane objects inside and outside the printer 2 may be envisioned.

The finisher 3 may be a trimming device, a cutting device, a punching device, a folding device, a laminating device or any other finishing device, or a device which combines before-mentioned finishing actions. It is also in the scope of the invention that the document processing system 1 comprises a plurality of finishers which is concatenated to a sequence or network of finishers positioned to allow sequential and/or parallel finishing. The plurality of finishers is used after a printing process on the printer 2. It is also in the scope of the invention that the document processing system 1 comprises a plurality of printers which is concatenated or positioned to allow sequential and/or parallel processing of the print job.
The at least one printer and the at least one finisher are available for use in the production of the at least one end print product according to the invention.

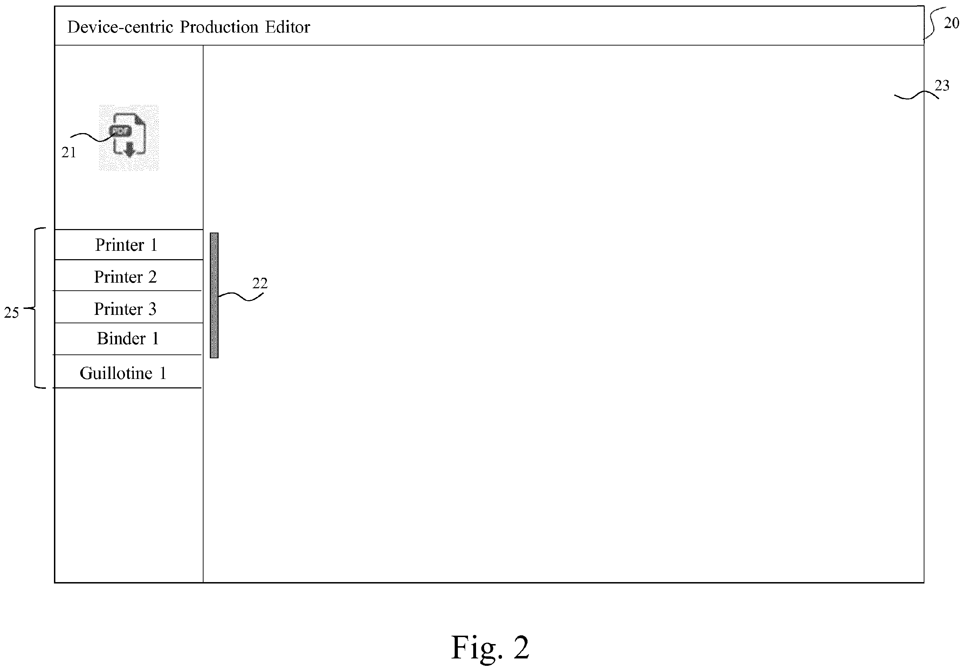

Fig. 2 shows a user interface window 20 for a device-centric production editor. The window 20 comprises a button 21 to upload a print file in PDF format - other formats may be envisioned - that should be produced by the document processing system 1.

The window 20 also shows a device pool 25 which comprises a catalogue of device objects like "Printer 1", "Printer 2", "Printer 3", "Binder 1" and "Guillotine 1". When a device is an in-line or an on-line device relative to the printing device they belong to, the device object of the device may be shown indented in the device pool 25 with respect to the corresponding printer object. Off-line and near-line devices may not be indented, so be positioned at a same level of the printing object, as off-line and near-line devices can be combined with any printer. The possible position of an in-line or on-line device relative to another in-line or on-line device in a same printer may be indicated by a sequence of the corresponding device objects indented under the printer object in the device pool 25. The first/top device under the printer object will be activated before the next/lower ones.

The window 20 also shows a workspace 23 for adding production lane objects according to the invention. A blue vertical bar 22 indicates an active top row which is intended to contain a first production lane object.

The document processing system 1 is configured to enable a user to select a device object from the device pool 25 and to add the selected device object to one of the production lane objects.

Adding of the selected device object to one of the production lane objects may be done by dragging the selected device object to the desired production lane object.

In another embodiment adding of the selected device object to one of the production lane objects may be done by firstly change one production lane object in an active state and secondly select a device object from the device pool 25 and automatically add the selected device object to the active production lane object.

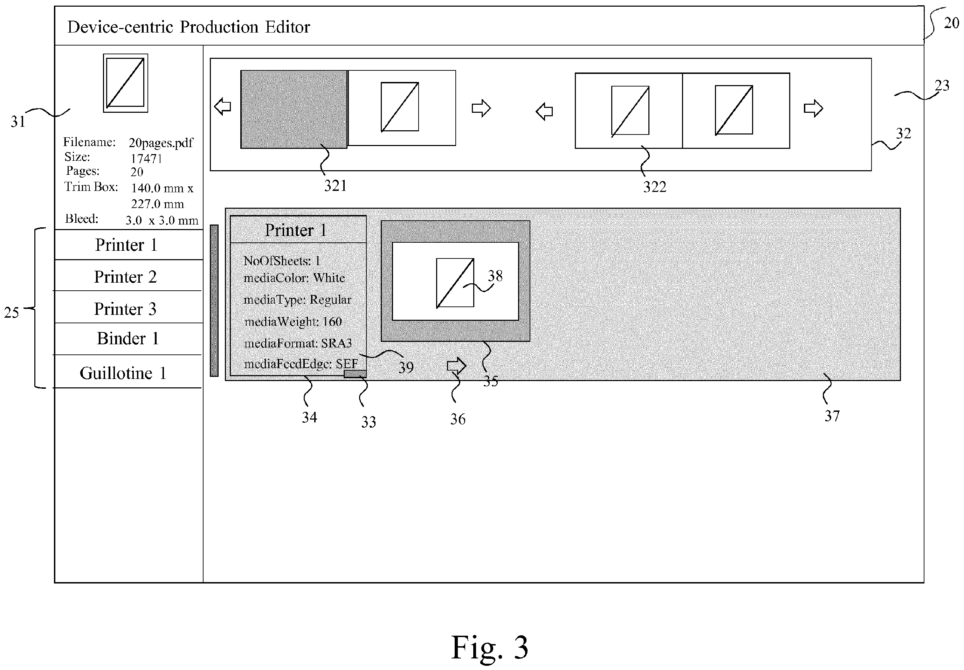

The upload facility by means of button 21 is used to upload a pdf file named "20pages.pdf" into the user interface window 20 of the device-centric production editor. Fig. 3 shows the window 20 after uploading the document "20pages.pdf". The document area 31 is used to list production information for the document "20pages.pdf", like filename, size, number of pages, a trim box width and length, and a bleed width and length.

Fig. 3 also shows a non-limiting example on the user interface window 20 of a first production lane object 37 according to the invention. The first production lane object 37 is displayed in one direction in a plane of the user interface window 20, i.e. horizontally.

A new production lane is created when a device of the document processing system 1 is selected from the device pool 25 to be used for the production of at least one end print product which device has an input which is not an output of another device of the document processing system 1.

The first production lane object 37 comprises a first device object 34 representing a device labelled "Printer 1" in the device pool 25. The first device object 34 labelled "Printer 1" in the device pool 25 is dragged from the device pool 25 into the first production lane 37. The first device object 34 in the first production lane object 37 comprises a list 39 of smart default values for printer parameters with feedback on possible constraints resulting from simulation of the device models of the production route using the print job (PDL) specifications. The list 39 may comprise for example a number of sheets, a media colour of a media which is going to be consumed, a media type of the media, a media weight of the media, a media format of the media and/or a media feed edge of the media. A green execution button 33 may be activated to send the print job to the device labelled "Printer 1".

An instructions button (not shown) may be present in the first device object 34 in order to allow previewing of the exact production instructions for the device represented by the first device object 34. The exact production instructions may be in the form of a JDF ticket or as step-by-step actions to be executed by a device operator.

Near the first device object 34 a preview box 35 is shown of a preview 38 of a document intended to be produced by the device "Printer 1" according to the print job specifications. The preview 38 may be an intermediate result and it reflects a result of simulating a current state of the production route in the production lanes. The preview 38 may be updated when the production route or device parameters are changed or extended. The preview 38 corresponds to the smart default values shown in the list 39. An indicator like an arrow 36 shows in which direction a next device object may be added after the first device object 34 in the first production lane object 37.

In the top of the window 20 a preview area 32 is shown with the result of the production route as constructed so far in the production lane objects. The preview area 32 shows a spread preview 321 on the left side and an imposition preview 322 on the right side of the end result of simulating the production route using the specified device parameters and the input file. With arrows positioned left and right of each preview the operator may step through the end result which resembles a reader leaving through the end product. In the production lanes, also a preview on work in progress flowing from one device to another device is shown. This is advantageous, since a user is given feedback on production results of the constructed production route, as it allows to adapt the production route to achieve the intended end product.

A production lane object 37 has a relative large length L to a width W of the production lane object 37. The relative large length L is substantially displayed in the one direction on the window 20. A production lane object 37 comprises the device object 34 in a consecutive order of processing in the one direction of the length L of the production lane object 37. In a same production lane object 37 output of a device represented by the first device object 34 may be input for the next device represented in the production lane object 37 or input for a device represented in another production lane object in the window 20.

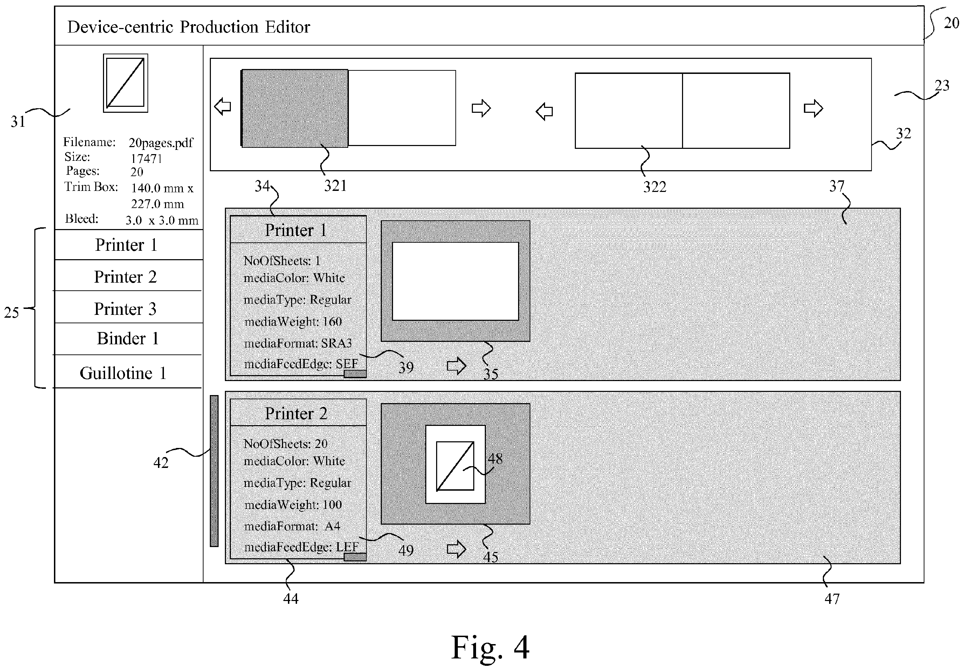

More than one production lane object may be envisioned and more than one device objects in a production lane object may be envisioned as will be shown in Fig. 4.

Fig. 4 shows a second production lane object 47 which is active as indicated by a blue bar 42. A second device object 44 labelled "Printer 2" is dragged from the device pool 25 into the second lane object 47. A preview area 45 comprising a preview 48 of the output of the device "Printer 2" is shown near the second device object 44 in the second production lane object 47.

The second device object 44 in the second production lane object 47 comprises a list 49 of printer constraints suitable to produce a document according to the print job specifications. The list 49 may contain for example a number of sheets, a media colour of a media which is going to be consumed, a media type of the media, a media weight of the media, a media format of the media and/or a media feed edge of the media. The preview 48 corresponds to the smart default values shown in the list 49.

In this example the printer device represented by the first device object 34 is intended to produce a cover sheet for the end product. From the list 39 it can be derived that a weight of the cover sheet is 160 g/m2, a format of the cover sheet is SRA3 and a feed edge is a short edge (SEF).
In this example the printer device represented by the second device object 44 is intended to produce a book block for the end product. From the list 49 it can be derived that a weight of a sheet in the book block is 100 g/m2, a format of the sheet is A4 and a feed edge is a long edge (LEF).

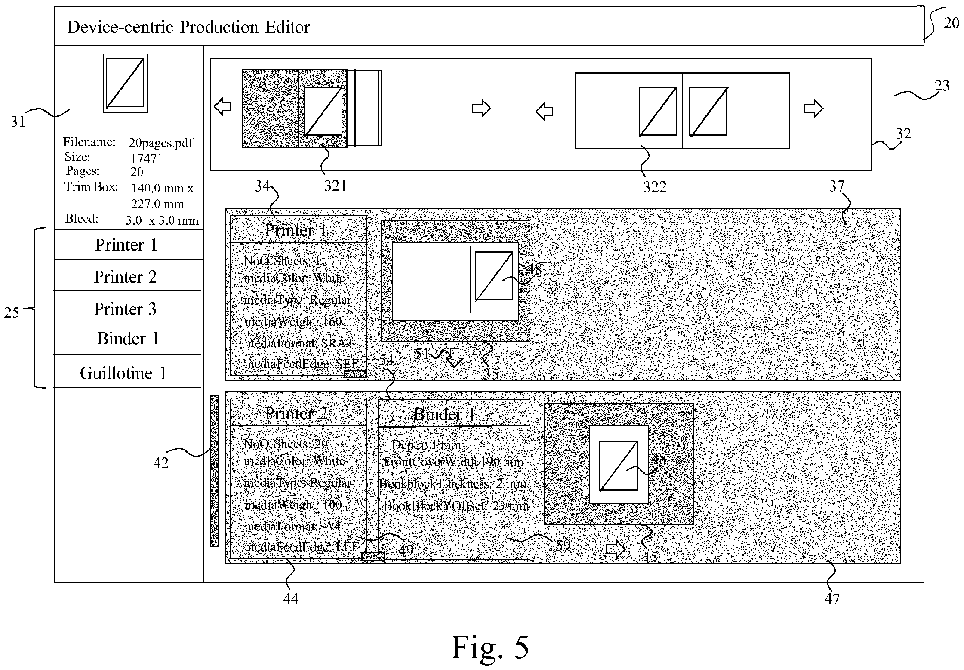

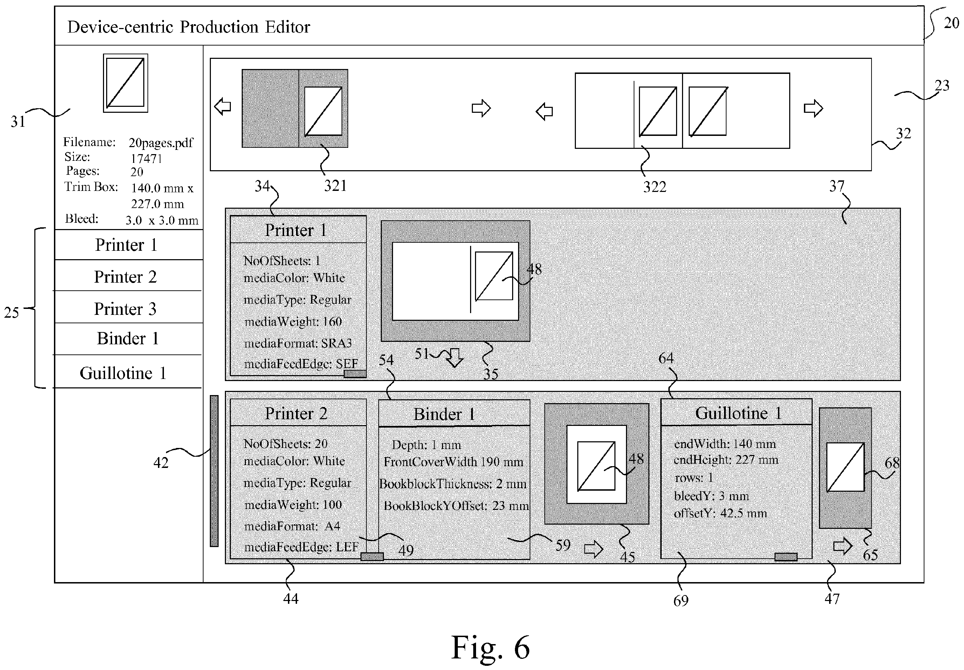

More than one device object in a production lane object may be envisioned as will be shown in Fig. 5 and Fig. 6.

Fig. 5 shows the second production lane object 47 which is active as indicated by a blue bar 42. A third device object 54 labelled "Binder 1" is dragged from the device pool 25 into the second production lane object 47. A preview area 45 comprising a preview 48 of the output of the device "Binder 1" is shown near the third device object 54 in the second production lane object 47.

The third device object 54 in the second production lane object 47 comprises a list 59 of binder constraints suitable to produce a document according to the print job specifications. The list 59 may contain for example a depth, a front cover width, a book block thickness and a book block Y offset. The preview 48 corresponds to the smart default values shown in the lists 39, 49 and 59. By adding the third device object 54 labelled "Binder 1" to the second production lane object 47, the device named "Binder 1" becomes an inline finisher of the second device labelled "Printer 2". Therefore, only one execute button is present for the second device object 44 together with the third device object 54 and not anymore for the second device object 44 only in the second production lane object 47. Separate instructions buttons (not shown) may be shown in the second device object 44 as well in the third device object 54 to preview instructions for the respective devices.
The horizontal arrow 36 in Fig. 2 has been changed into a vertical arrow 51 in Fig. 5 to show that the cover sheets of the device labelled "Printer 1" in the first production lane object 37 flow automatically into a cover input of the device labelled "Binder 1" and represented by the third device object 54 on the active second production lane object 47. The vertical arrow 51 is an example of a combination digital object according to the invention which is directed from the first device object 34 in the first production lane object 37 to the third device object 54 in the second production lane object 47.

A preview of the work in progress is adapted in the preview area 32 in Fig. 5.

The device represented by the third device object 54 in the second production lane 47 is capable of receiving multiple inputs. The device represented by the third device object 54 may have a plurality of input holders. For example, the output (cover sheets) of the device represented by the first device object 34 may be received by one of the input holders of the device represented by the third device object 54 which is configured to receive cover sheets, and output of the device represented by the second device object 44 may be received by another of the input holders of the device represented by the third device object 54.
By using and interpreting the device models of the devices represented by the device objects 34, 44, 54 the controller 12 is able to establish which input holder of the device represented by the third device object 54 is most suitable for the output of the other devices represented by the first and second device object 34, 44 respectively.

A multiple input device combines two or more inputs for the device into one output of the device.
The multiple input device may be a human operator that processes multiple stacks of sheets, where each stack contains a number of copies of the same sheet. The human operator takes one sheet from each stack in the same order to compile a document which he binds using the stapler.
The multiple input device may be a gatherer-stitcher which combines multiple inputs (booklets) into a single output.
The multiple input device may be a perfect binder that is connected online with a black and white printer.

According to the device models and based on the constraints and capabilities of the plurality of devices represented by the device objects 34, 44, 54 the controller 12 automatically checks positively that the device represented by the third device object 54 in the second production lane object 47 needs input from a device represented by the device object 34 in the first production lane object 37.
Since the outcome of the check is positive, the controller 12 will instruct the user interface to show at the user interface window 20 the combination digital object in the form of a vertical arrow 51. The combination digital object 51 is directed from the first device object 34 towards the third device object 54.

The third device object 54 represents a device which is a multiple input device, i.e. a device which is configured to combine a plurality of inputs into at least one output.

Fig. 6 shows the second production lane object 47 which is still active as indicated by a blue bar 42. A fourth device object 64 labelled "Guillotine 1" is dragged from the device pool 25 into the second production lane object 47. A preview area 65 comprising a preview 68 of the output of the device "Guillotine 1" is shown near the fourth device object 64 in the second production lane object 47.

The fourth device object 64 in the second production lane object 47 comprises a list 69 of guillotine constraints suitable to produce a document according to the print job specifications. The list 69 may contain for example an end width, an end height, a number of rows which indicate a same-up functionality, a Y bleed and a Y offset. Fig. 6 shows a 1-up functionality meaning that the number of rows is equal to 1. The preview 68 corresponds to the smart default values shown in the lists 39, 49, 59 and 69. By adding the fourth device object 64 labelled "Guillotine 1" to the second production lane object 47, the device named "Guillotine 1" becomes an offline finisher of the books produced by the third device labelled "Binder 1". Therefore, an extra execution button is present for the fourth device object 64 in addition to the execution button shown as well as for the combination of the second device object 44 and the third device object 54 in the second production lane object 47. This is a result of the in-line, on-line, off-line knowledge in the device models of the devices represented by the device objects 44, 54, 64. A separate instructions button (not shown) may be shown in the fourth device object 64 to preview instructions for the device labelled "Guillotine 1".

A preview of the work in progress is adapted in the preview area 32 in Fig. 6.

The device represented by the fourth device object 64 in the second production lane 47 is capable of receiving only one input. The device represented by the fourth device object 64 has for example one input holder for receiving a stack of sheets. By using and interpreting the device models of the devices represented by the device objects 34, 44, 54, 64 the controller 12 is able to establish that output of the third device object 54 is suitable as input for the one input holder of the device represented by the fourth device object 64.

Another example of devices in multiple production lanes is a production route which is a colour split and merge route. In a first production lane object a device object is present which represents a colour printer which print colour pages from an uploaded document. In a second production lane object a device object represents a printer which produces black and white pages of the uploaded document and another device object represents a device - for example a perfect binder - which produces the finished product, for example a perfect bound book. The second production lane has an additional input - being the input in the other device object of the perfect binder - to insert the printed colour pages from the first production lane object into the black and white pages produced in the second production lane object.
For the colour split and merge production route, printing colour inserts may be done by n-copies of each colour insert. This requires multiple inserter trays on the black and white printer, one for each insert page. The black and white job pulls each insert page from another inserter tray, i.e. multiple inputs are involved.
Printing the colour inserts may also be done by one set-by-set, resulting in a cyclic sequence of colour pages. This requires only a single inserter tray. The black and white job should then repeatedly pull an insert page from the same inserter tray, i.e. a single input is involved.
The merged colour pages and black and white pages of the book block may then merged again with a colour cover in a perfect binder.

According to a further embodiment the lists 39, 49, 59, 69 are editable. The device objects 34, 44, 54, 64 positioned in one of the production lane objects comprise initially the list 39, 49, 59, 69 with smart default production parameter values. But each production parameter in the list is editable, i.e. may be changed for a device represented by the corresponding device object. The operator may change or fix some device parameters to another value. This will result in new print job specifications.

Upon editing a production parameter from the list 39, 49, 59, 69 the controller 12 determines a new preview image of the output of the device which new preview image corresponds to the edited production parameter. The new preview image is displayed near the corresponding device object in the appropriate production lane object.

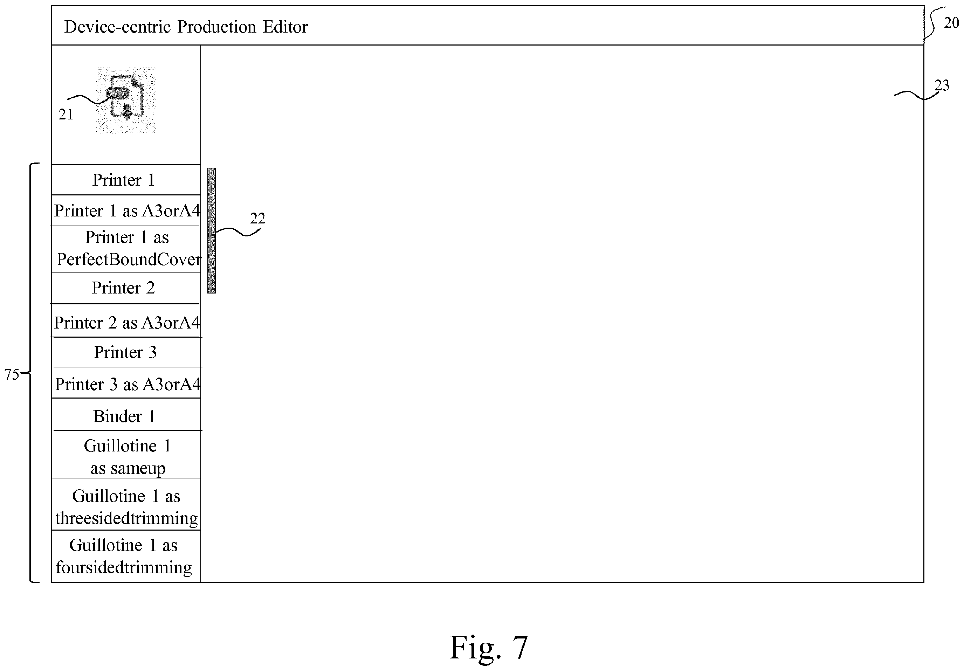

Fig. 7 resembles Fig. 2, but Fig. 7 shows an extended device pool 75. The extended device pool 75 comprises the entries as in the device pool 25 in Fig. 2 and also additional entries which indicate a device policy of a use of the device. A selection of an entry as in the device pool 25 in Fig. 2 will lead to a list 39, 49, 59, 69 of default production parameters for the device corresponding to the entry. The additional entries are labelled with a label phrase like "<device name> as <use>", for example "Guillotine 1 as threesidedtrimming". A selection of an additional entry in the device pool 75 in Fig. 7 will lead to a list of dedicated - usually limited - production parameters for the device corresponding to the additional entry when the device is intended to be used in the way as specified in the label phrase.
When printing many devices have different usages. For example, a guillotine device may be used as a cutter for full-bleed, or may be used to perform a three sided trimming action. This usages are so common that helping the operator to have a device object available for a device being configured as its use, is a quick way to ensure that the device is use appropriate for the purpose and to automate production routes.

Ranges of settings for production parameters may be limited, fixed to a certain level or specific device policies that perform automation may be enabled. The more context the operator provides, the more help the document processing system 1 is able to give in automation.

A device represented by a device object is configurable by setting values of the at least one production parameter and the device model of the device has a default device policy of how to use the device to achieve a desired output as according to the device pool 25 in Fig. 2. On the other hand a device may have other device policies as according to the extended device pool 75 in Fig. 7.

According to an embodiment a device object with a device policy is dropped or placed on a production lane and a label specifying a purpose of the device represented by the device object is still to be selected or changed.

Each device policy is determined by a subset of the values of at least one production parameter in the list 39, 49, 59, 69. The document processing system 1 is configured to select a device policy, and to instruct the device to act according to the selected device policy by limiting the set of values of the at least one production parameter to a subset which is determined by the selected device policy. After simulation by means of the device models these effects of selecting the device policy is shown in the work in progress previews and the end result previews.

Besides a manual selection of the use by means of an entry in the device pool 75, the document processing system 1 may also automatically select a correct purpose. Such an automation may be made possible by inspection of a logged action history. As a specific case, the controller 12 may check whether a stack of sheets are bound by a booklet maker and, if so, instruct the device represented by device object 64 labelled "Guillotine 1" to activate the three-sided trimming policy.

Another example is the use of the guillotine device that is able to trim and cut for a same up feature. When the guillotine device is used in a production flow for bound work such as booklets or perfect bound documents, a spine (by folding and gluing) must be kept. Therefore the guillotine device is used as a three-sided trimmer. In that case the same up strategy always takes place in the direction of the spine.

In another example for bound work, a trim offset will always be zero from the spine in order to keep the spine and is not changeable by overwriting. Same-up strategy for left-handed booklets will always be in the above each-other.

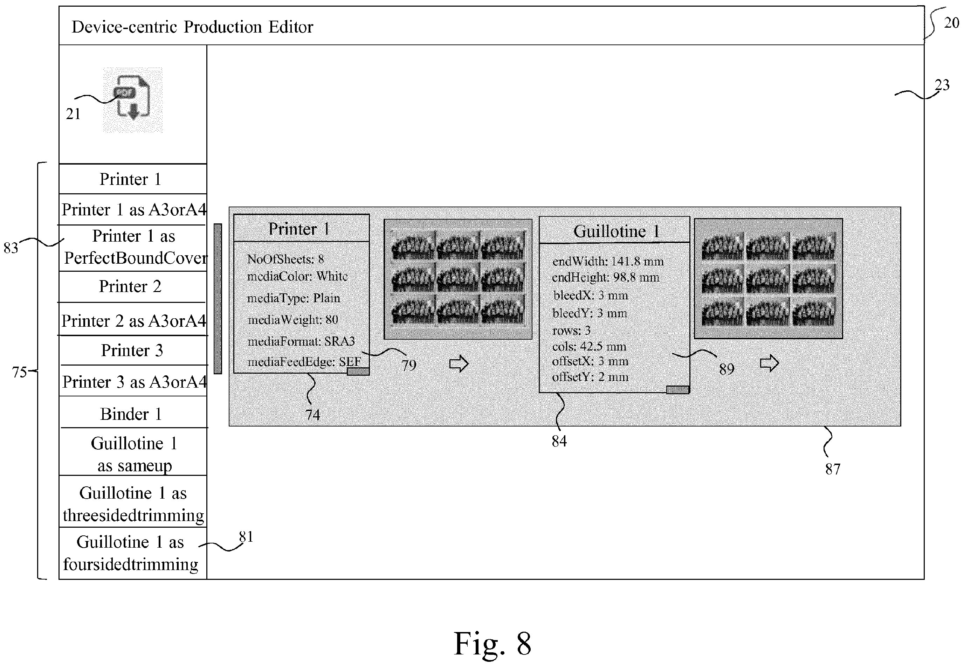

Fig. 8 - 9 show examples of usages of a device in a production lane object 87 and in a production lane 97 respectively.

Fig. 8 shows a device object 74 being selected from the device pool 75 as option 83 labelled "Printer 1" with a dedicated list 79 of smart production parameters values. A device object 84 is selected from the device pool 75 as option 81 labelled "Guillotine 1 as foursidedtrimming" with a dedicated list 89 of production parameters showing a maximum same up in both X and Y direction and having values to set bleed in both X and Y directions. The X and Y directions correspond to the number of rows and the number of columns respectively as shown in Fig. 8. The bleeds default values in the X and Y direction result from bleed information in PDL content as is shown in the work in progress preview flowing into the device represented by device object 84.

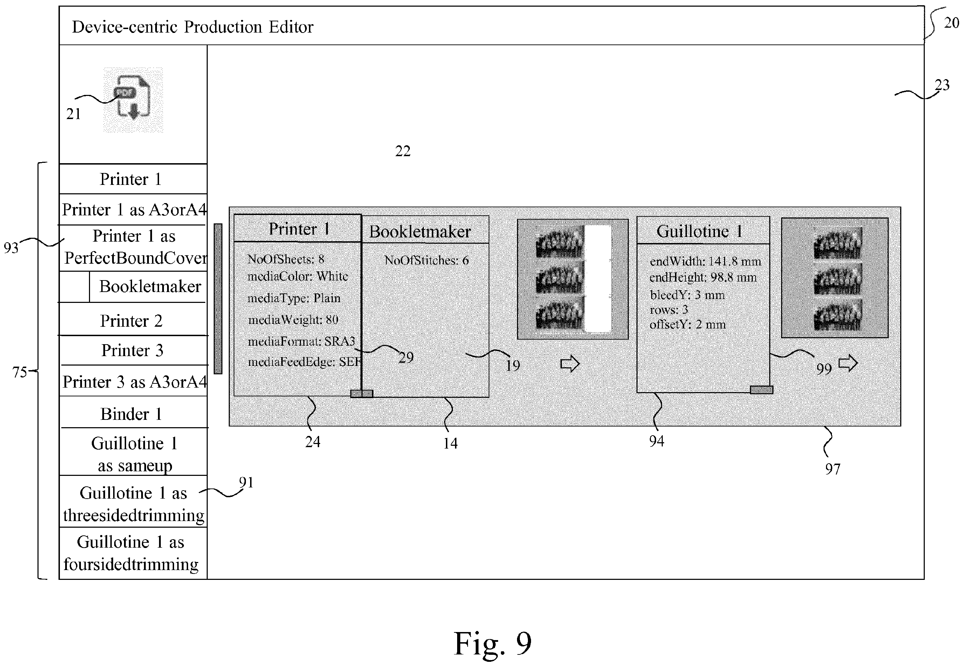

Fig. 9 shows a device object 24 being selected from the device pool 75 as option 93 labelled "Printer 1" with a dedicated list 29 of smart production parameters values together with a device object 14 being selected from the device pool 75 with a dedicated list 19 comprising an additional parameter with a number of stitches. A device object 94 is selected from the device pool 75 as option 91 labelled "Guillotine 1 as threesidedtrimming" with a dedicated list 99 of production parameters showing only a same up in the Y direction and having only a bleed set in the Y direction. A number of columns is not shown which is fixed to 1 as this production route is for bound work. Bleed X may also be shown which may be relevant for a face trim.

Fig. 8 and 9 are detailed examples for a guillotine device, but many examples with other devices exist and may be implemented in the document processing system 1 according to the invention.

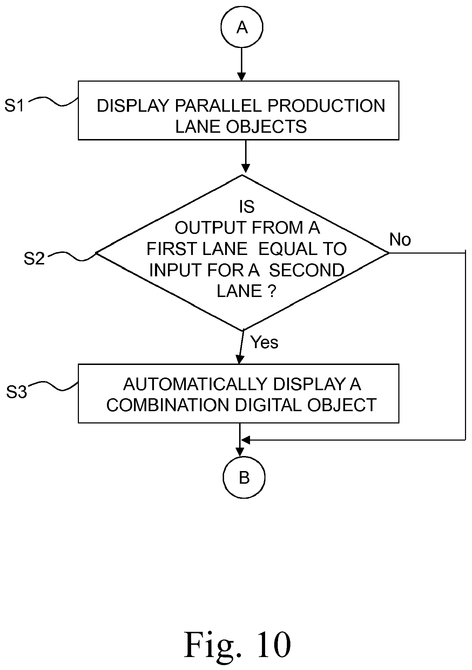

Fig. 10 is a flow diagram of a method according to the invention.
The method starts in a start point A which leads to a first step S1.

In the first step S1 parallel production lane objects are displayed on a user interface window of the document processing system according to the invention.
The parallel production lane objects are displayed in one direction in a plane of the user interface window with respect to a production of at least one end print product by the document processing system. The production lane objects comprise at least one device object. A device object represents a device of the plurality of devices. Each production lane object having a relative large length to a width of the production lane object, the relative large length being substantially displayed in the one direction on the window and comprising at least one device object in a consecutive order of processing in the one direction of the length of the production lane object. Output of a device is input for the next device represented in the same production lane object. The production lane objects are parallel to each other in the one direction of the production lanes objects.

In a second step S2 it is automatically checked based on the constraints and capabilities of the plurality of devices needed for the at least one end print product if output of a first device represented by a first device object at the end of one production lane object which is not an end print product out of the at least one end print product is input for a second device represented by a second device object in another production lane object which is located lower on the window than the one production lane object, and if the outcome of the check is positive, the method continues with a third step S3.

In the third step S3, a combination digital object is automatically displayed at the user interface window a combination digital object directed from the first device object towards the second device object.

The method ends in an end point B.

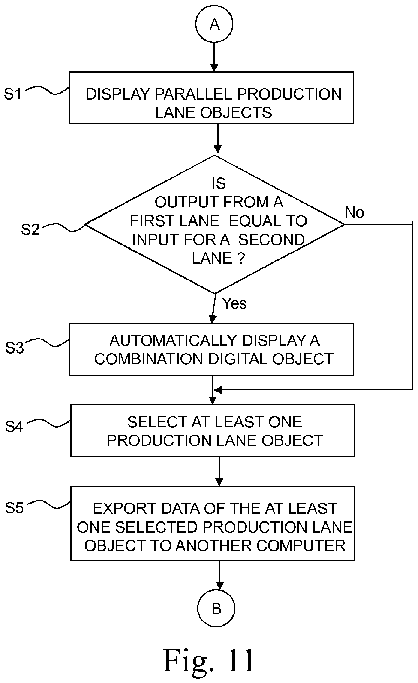

Fig. 11 shows another embodiment of the method according to the invention, the method comprises the steps S1 - S3 as in Fig. 10 and additional steps S4 - S5.

In a fourth step S4 at least one production lane object is selected.
In a fifth step S5 the device objects with parameters, constraints and capabilities from the corresponding device model from the at least one production lane object are exported via a messaging format to another computer.

The other computer may be used to design the at least one end product, plan production of the at least one end product, estimate cost of the at least one end product or manage the at least one end product in a warehouse with respect to the required materials for the at least one end product. The user interface windows shown in Fig. 2 - 9 may also be exported for each print job.

The case that the computer is used to design the at least one print end product will be further elaborated upon hereinafter. The other mentioned cases may be equivalently envisioned and are similarly implementable according to the embodiment shown in Fig. 11.

In the fifth step S5 the device objects with parameters, constraints and capabilities from the corresponding device model from the at least one production lane object are exported via a messaging format to another computer which is used to design the at least one end product. By doing so the designer is kept informed on how the printing and the finishing steps affect his content.

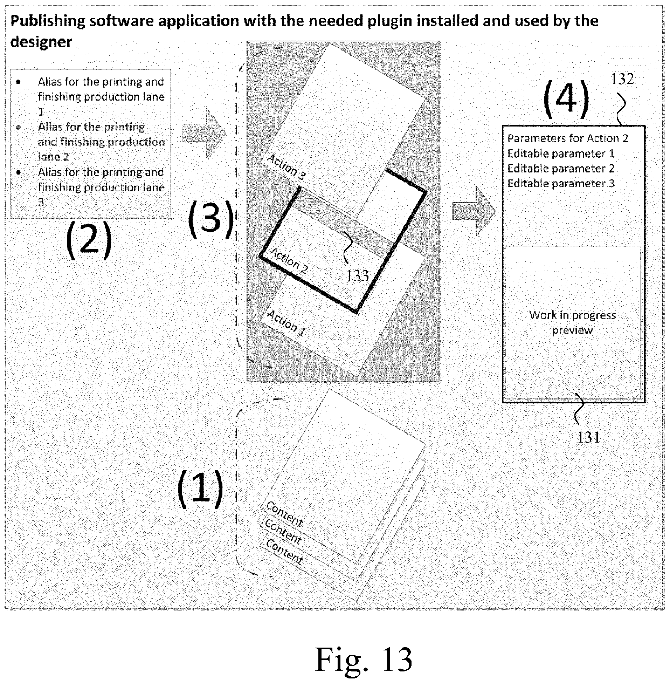

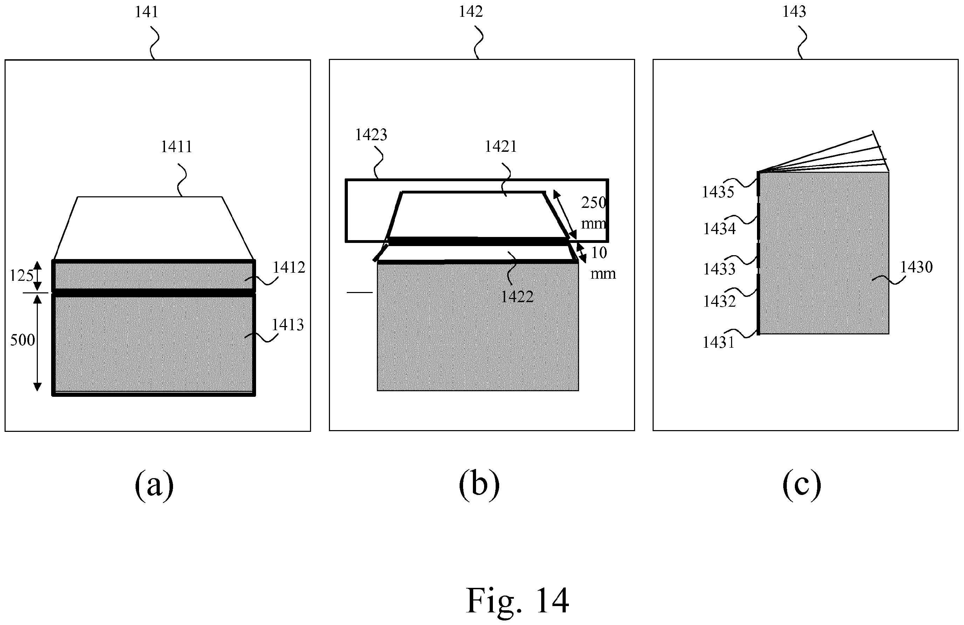

For delivering the expected end product, a close team work enabling a better collaboration with a seamless communication is crucial. The communication is not only crucial between the designers, but also with artists, photographers and, of course, with print service providers. Those people are the extended team of a designing process. Moreover, just like the materials (substrates), print finishing techniques affect directly the content and can give an extra layer of meaning to a design, to the meaning of the end product used to express a "story". The print finishing techniques have an unquestionable impact and give added values to the end product.
So, one of the designer's jobs is to make the relation between the artistic part and the technical part of a printed product, i.e. between the design and the production. Currently, the end product viewed by the designer in a publishing software application may be different from the one printed/produced by the document processing system 1. Sometimes what the designer would like to have cannot be easily produced or at a reasonable cost.
To allow a designer to get easily and early a sense for the impact of the finishing technique(s) on his designed content.
Designers are used to create products by using layers in the publishing software application (like Adobe InDesign). The method according to Fig. 11 is transposing finishing steps that are actions made on sheets, with their constraints and editable parameters as defined in the production lane objects in Fig. 2 - 9, to layers.
A domain specific language may be used to express and simulate the processing of sheets before, during and after printing of the associated end product as for example disclosed in patent application EP3201755 A1. Such a technology is used to express and simulate a finishing part of the processing of the sheets.
A plugin is created in the publishing software application of the designer. The plugin is able to import and display by adding layers over the content the printing and finishing processes. The plugin is also able to export the choice made by the designer to a print service provider:
The printing and finishing processes proposed by the print service provider are split up as a sequence of printing and finishing steps by means of a domain specific language used to express and simulate the processing of sheets before, during and after printing of the associated end product.
The print service provider has a software application that uses the printing and finishing processes created with the domain specific language and gives the functionalities a) to select, for each step of a printing and finishing process, the editable production parameters shown in the lists 39, 49, 59, 69, 79, 89, 99, b) to export the chosen printing and finishing processes with their editable parameters and constraints via a messaging format recognized by the plugin installed in the publishing software of the designer.
A printing and finishing production could be for example a printer with an inline booklet maker and an offline guillotine or a printer with a near-line cutter/slitter, etc.

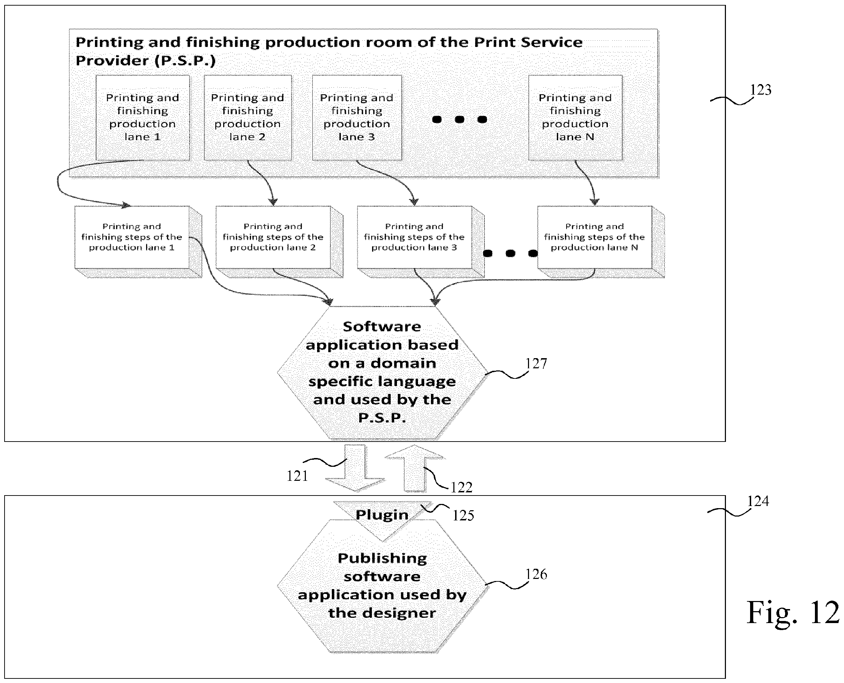

Fig. 12 shows a schema representing the prerequisites and the relation between the software applications used by the print service provider and the software application used by the designer. For convenience reasons the production lane objects will hereinafter be numbered from 1 to N. The term "production lane object" as described here-before with respect to Fig. 2 - 9 will hereinafter referenced to by "production lane". The relation between the software applications is represented via a two-way communication indicated by two opposite arrows 121, 122. The print service provider 123 exports his printing and finishing production lanes 1 - N. After selecting one of the production lanes 1 - N in order to create an end-product, the designer 124 exports a set of production parameters to be used in production.
Firstly, via his publishing software application 126, the designer 124 creates necessary layers for the content to be printed as shown by (1) in Fig. 13.
Within the same publishing software application 126, the designer 124 selects the printing and finishing production lane named by an alias that he wants to use for creating the end-product among an assortment as shown by (2) in Fig. 13.
The designer 124 has selected the printing and finishing production lane 2 from the list of the printing and finishing production lanes sent by the print service provider 123 and imported by using the plug-in 125.
After the selection, the publishing software application 126 adds automatically as many layers above the content layer(s) as steps made by the selected printing and finishing production lane 2. The first step of the production lane is the first one right above the content layers as shown by (3) in Fig. 13. The designer has selected the second action. A first action added above the content layers will be related to the printer used inside the printing and finishing production lane 2. If this action is selected by the designer 124, he will have for example as parameters, a list of usable media (with their size, colour, weight, etc.) and colour profiles intended to be used. In a work in progress preview 131, he will see the impact of the selected media and the selected colour profile on the content.
By selecting a printing and finishing layer, the designer 124 may change the related editable parameters 132 and preview, at the change moment, the result and the impact on his content as shown by (4) in Fig. 13.
If the selected printing and finishing layer corresponds to a punching action, the half-transparent red rectangle 133 in Fig. 13 shows an area in which the punching device is able to punch and thus, the area of the content that will be affected by the punching action.
Moreover, in case of constraints that are reached, information with explanations with respect to the constraints will be displayed. Devices which are used in a production route often have a limited operating range, for example a minimum and a maximum width and height of a sheet, a thickness of a stack, etc. Within the work in progress preview actions done by the device may be visualized, such a stitching, cutting, milling, folding, gluing, etc. Limitations of the actions may also be shown in the work in progress previews. It the input for the device is not within these limitations, a message may be visualized in the work in progress preview. Additionally, an operating range may be visualized in the work in progress preview to inform the user whether a maximum use of the range is taken advantage on or what latitude still exists in the production lane.
By showing an action that needs to be done on an input stack, an operator may immediately translate the visualization into activities he has to do manually and/or semiautomatically.
For example, a stack as shown in work in progress preview 141 in Fig. 14(a) may be too high for gathering inside a device. A green rectangle 1413 represents an allowed size. A red rectangle 1412 represents a surplus which does not fit. In a further embodiment the preview comprises amounts in a number of sheets (see Fig. 14(a)) for the allowed part 1413 and for the surplus 1412.
For example, the work in progress preview 142 in Fig. 14(b) shows a black rectangle 1423 representing a cutting knife. A red area 1422 is not possible to cut, while a green area 1421 is allowed to cut. In a further embodiment the preview comprises in a length unit (see Fig. 14(b)) for the allowed part 1421 and for the denied part 1422.
For example, the work in progress preview 143 in Fig. 14(c) shows a booklet 1430 to be stitched. Green areas 1432, 1434 are shown at which a stitcher may stitch. Red areas 1431, 1433, 1435 show where it is not possible to stitch.
By doing so, conflicts are made explicit in the physical domain they are encountered. This is done by modelling the actions of the device, the limitations of the device and the objects (for example sheets) in the device model, and translating the device model into a visualization closely resembling the real-life end product and devices as shown in Fig. 14(a) - 14(c), thereby also showing remaining latitude and constraints of the devices. The designer 124 may add more than one printing and finishing production lane above his content as long as the first printing and finishing production lane contains at least a printer.
In a use case, a print service provider 123 exports 3 printing and finishing production lanes. The first one corresponds to a printer, the second to an offline booklet maker and the third to an offline guillotine. Because the second and the third correspond to offline devices, the designer 124 will be able inside his publishing software application 125 to swap the group of layers related to the both printing and finishing production lanes. In this way, the designer will be able to see what happens if he uses right after the printer, the offline booklet maker and then the offline guillotine or the other combination (first, the guillotine, then the booklet maker). In general, a printing and finishing production lane can be moved if its first device is off-line or near-line.
At the end, when the designer 124 is satisfied by the result, he can export to the print service provider 123, the PDF file corresponding to the content and a list of selected printing and finishing production lanes he wants to use with the parameters he has defined.
The print service provider 123 sends to the designer 124 a list of printing and finishing production lane(s). Each of the printing and finishing production lane(s) corresponds to a sequence of printing steps and/or finishing steps.

The plugin 125 to be installed in the publishing software 126 used to receive the list of printing and finishing production lane(s) from the print service provider 123 and used to export the defined configuration made by the designer 124 of the selected production lane(s).
The layers inside the publishing software 126 are used for getting an accurate preview of the printing and finishing steps applied on the content, for observing a content area affected by a printing and finishing production step, for defining the editable parameters of each printing and finishing production step, and for validation of the feasibility and possibility of experimentations.
The print service provider 123 is able, for each printing and/or finishing steps of a printing and finishing production lane, to define the list of the parameters editable by the designer 124. Instead of providing editable parameters. The print service provider 123 may decide to provide a list of printing and finishing production lanes with predefined values for the parameters (template of parameters).
An arbitrary software application 127 may be used by the print service provider 123 to extract, formalize and send to the designer 124 the list of printing and finishing production lanes. An arbitrary messaging format may be used between the software application 127 of the print service provider 123 and the plug-in 125 in the publishing software 126 of the designer 124.
By doing so, the designer 124 is allowed to interact virtually with the production process and to see the effects of the required printing and finishing steps to produce the desired end-product (for example, color variation due to a varnishing step).
By selecting a layer corresponding to a printing or finishing step, the designer 124 is able to see a preview 131 related to this step (work in progress preview) with the related constraints and the editable parameters 132.
By doing so, printing and finishing processes are transposed into designing habits. Here-before a publishing software application 126 is mentioned but the invention may be applied to any other type of software application in which a user can apply finishing processes on a content (e.g. word processor software application).
Applying the invention will gain time (less "produce and error" steps), reduce experimentation costs and improve innovative design. Others functionalities may be easily added like production time forecast, production costs estimation. The designer 124 is helped by using his habit of layers to transpose printing and finishing techniques into their designing process. Moreover, the impact of the printing and finishing techniques and theirs mechanical constraints will be visible in an early stage of the designing process by the designer 124. So, the impact will be more easily manageable i.e. the designer 124 will be able to make decisions in the design earlier and therefore gain time and reduce waste. Finally, this invention allows to create and to maintain a trust relationship between designers and print service providers.
The document processing system 1 according to the invention facilitates a number of actions on a production lane or on a group of production lanes. The production lanes together may form a production route. The production route is a concatenation of device models of production devices such as printers and various inline, online, near-line and offline finishing devices, with their respective settings. The document processing system 1 shows the user settings related to each of the device models. The document processing system 1 calculates smart defaults based on the capabilities and constraints captured in the device models. Construction, selection and execution of a production route can be done in various ways which will be elucidated hereinafter.
The document processing system 1 has a user interface 7 shown in Fig. 1 that shows the device pools 25, 75 of all devices. A production route can be constructed interactively by connecting device objects from the device pools 25, 75 as shown by Fig. 2 - 9.
The document processing system 1 knows by means of the device models if a finisher is inline, online, offline or near-line. Execution buttons are provided for each printer and for each offline or near-line device. One execution button is provided for a combination of a printer and an inline/online device. Instructions buttons allow the operator to view the ticket/instructions. As the device object represents an online finisher, it has its own instructions button.
When integrated in a printer device, the document processing system 1 may discover inline and/or online devices attached to the printer device. The production route is constructed by concatenating the device models for each of the recognized devices.
A production route may be saved under a user specified name and can at a later time be retrieved so it can be used again. Storing and retrieving a production route allows an easy re-use and minimizing repetition and errors.
A restored production route may be adapted before being used again. For example, remove an offline guillotine device and add an online trimmer device. Addition and removal of a device object allows an easy modification of the production routes.
A restored production route may be tweaked before being used again. For example, the punch pattern setting can be adapted before producing punched documents. A tweak of a restored production route offers flexibility to change settings before execution of the production route.
Production routes may be composed with other production routes to cover all production steps in a print factory. E.g. routes from the print room can be combined with after press routes. Composition of production routes allows to combine production routes offered by various production departments. A separation of concerns allows composition by account managers that are aware of customer intent but do not (have to) know in-depth peculiarities of production steps. This way of working minimizes errors and dependency on specialists.
Production routes may be transported to another location, e.g. to allow production on another site. Transport may be done by saving into a file and sending the file to the other location as for example shown in step S5 of Fig. 11. Transport may also be done by embedding the route in the print job, so the receiving site has all information to start production. Sending and receiving production routes allows organizing a production on a global scale or cloud scale based on a common device modeling paradigm.
A production route may be associated with a hot folder, printer queue or virtual printer. Each print job that is received via such hot folder, printer queue or virtual printer, it is processed according to the settings in the associated production route.
Execution of a production route allows an easy automation of production by applying a selected production route to each print job. In case of doubt, the user may just open or retrieve the production route to see by means of previews according to the invention the associated end product produced by his PDF by the selected production route.
Each of the actions described here-above may be facilitated by a dedicated digital user operable element on at least one window of the user interface according to the invention.
The skilled person will recognise that other embodiments are possible within the scope of the appended claims.

## Claims

1. A document processing system comprising a plurality of devices, the plurality of devices comprising at least one printer and at least one finisher in order to deliver at least one end print product according to print specifications, each device of the plurality of devices being described in a dedicated device model comprising constraints and capabilities of said device, the document processing system comprising
a user interface window for displaying in one direction in a plane of the user interface window parallel production lane objects with respect to a production of the at least one end print product, the production lane objects comprising at least one device object, each device object representing a device of the plurality of devices,
each production lane object having a relative large length to a width of the production lane object, the relative large length being substantially displayed in the one direction on the window and comprising at least one device object in a consecutive order of processing in the one direction of the length of the production lane object, wherein output of a device is input for the next device represented in the same production lane object,
wherein
the document processing system is configured
to automatically check based on the constraints and capabilities of the plurality of devices needed for the at least one end print product if output of a first device represented by a first device object at the end of one production lane object which is not an end print product out of the at least one end print product is input for a second device represented by a second device object in another production lane object than the one production lane object, and if the outcome of the check is positive,
to automatically display at the user interface window a combination digital object directed from the first device object towards the second device object.

2. A document processing system according to claim 1, wherein the second device represented by the second device object in the one another production lane object is a multiple input device which is configured to combine a plurality of inputs for the multiple input device into at least one output.

3. A document processing system according to claim 1 or 2, wherein the user interface window comprises a device pool of a plurality of device objects and the document processing system is configured to enable a user to select a device object from the device pool and to add a selected device object to one of the production lane objects.

4. A document processing system according to claim 3, wherein the document processing system is configured to add the selected device object to one of the production lane objects by means of a dragging action.

5. A document processing system according to claim 3, wherein the document processing system is configured to change a status of one of the production lane objects into an active status as a receptacle, to enable a user to select a device object from the device pool and to automatically add the user selected device object to one end of the one production lane object.

6. A document processing system according to claim 3, wherein the document processing system is configured to determine a preview image of an output of a device represented by the selected device object, and, upon adding the selected device object to one of the production lane objects, to display the preview image near the selected device object in the one production lane object.

7. A document processing system according to any of the preceding claims,
wherein a device object positioned in one of the production lane objects comprises an initially visible list of at least one editable production parameter for a device represented by the device object.

8. A document processing system according to claim 7, wherein the document processing system is configured upon editing a production parameter from the initially visible list, to determine a new preview image of the output of the device which new preview image corresponds to the edited production parameter, and to display the new preview image near the selected device object in the one production lane object.

9. A document processing system according to any of the preceding claims,
wherein a device object positioned in one of the production lane objects comprises a user operable digital element to display operator instructions for the device represented by the device object.

10. A document processing system according to any of the preceding claims,
wherein each production lane object comprises a user operable digital start item to start the processing of the at least one device represented in the production lane object.

11. A document processing system according to claim 7, wherein a device represented by a device object is configurable by setting values of the at least one production parameter and the device model of the device has at least one device policy of how to use the device to achieve a desired output, each device policy being at least determined by a subset of the values of the at least one production parameter, and the document processing system is configured to select a device policy, and to instruct the device to act according to the selected device policy at least by limiting the set of values of the at least one production parameter to a subset which is determined by the selected device policy.

12. A document processing system according to claim 11, wherein the document processing system is configured to select the device policy of the device from a list displayable near the device object representing the device.

13. A document processing system according to claim 11, wherein the document processing system is configured to automatically derive the desired device policy of the device from at least the print specifications of the at least one end print product.

14. Method for a document processing system comprising a plurality of devices, the plurality of devices comprising at least one printer and at least one finisher in order to deliver at least one end print product according to print specifications, each device of the plurality of devices being described in a dedicated device model comprising constraints and capabilities of said device, the method comprising the steps of
- on a user interface window displaying in one direction in a plane of the user interface window parallel production lane objects with respect to a production of the at least one end print product, the production lane objects comprising at least one device object, each device object representing a device of the plurality of devices, each production lane object having a relative large length to a width of the lane, the relative large length being substantially displayed in the one direction on the window and comprising at least one device object in a consecutive order of processing in the one direction of the length of the production lane object, wherein output of a device is input for the next device represented in the same production lane object, the production lane objects being parallel to each other in the one direction of the production lane objects,
- automatically checking based on the constraints and capabilities of the plurality of devices needed for the at least one end print product if output of a first device represented by a first device object at the end of one production lane object which is not an end print product out of the at least one end print product is input for a second device represented by a second device object in another production lane object which is located lower on the window than the one production lane object, and if the outcome of the check is positive, and
- automatically displaying at the user interface window a combination digital object directed from the first device object towards the second device object.

15. Method according to claim 14, wherein the method comprises the step of
- selecting at least one production lane object,
- exporting the device objects with parameters, constraints and capabilities from the corresponding device model from the at least one production lane object via a messaging format to another computer being configured to at least one out of design the at least one end product, plan production of the at least one end product, estimate cost of the at least one end product and manage the at least one end product in a warehouse with respect to the required materials for the at least one end product.
